# EUROPEAN PATENT SPECIFICATION

(11) **EP 1 828 279 B1**
(45) Date of publication and mention of the grant of the patent: **18.02.2009**
(21) Application number: 04803059.7
(22) Date of filing: 22.12.2004
(51) Int. Cl.: A23G 4/06, C08G 63/60

(54) **DEGRADABLE POLYMER FOR CHEWING GUM**
ABBAUBARES POLYMER FÜR KAUGUMMI
POLYMERE DEGRADABLE POUR PATE A MACHER

(43) Date of publication of application: 05.09.2007
(73) Proprietor: Gumlink A/S, 7100 Vejle (DK)
(72) Inventor: WITTORFF, Helle, DK-7120 Vejle Øst (DK); STOREY, Robson, Hattiesburg, MS 39402 (US)
(74) Representative: Olesen, Kaj
(86) International application number: PCT/DK2004/000909
(87) International publication number: WO 2006/066573

(56) References cited:
- EP-A- 1 354 908
- WO-A-02/076232
- WO-A-20/04028267
- US-A- 5 672 367

## Description

### FIELD OF THE INVENTION

The present invention relates to the field of chewing gum and chewing gum polymers.

### TECHNICAL BACKGROUND AND PRIOR ART

US 5,672,367 describes polyester polymers obtainable by the polymerisation of cyclic esters. Explicitly is disclosed a co-polymer consisting of D,L-lactide and ε-caprolactone with a glass transition temperature (Tg) of 15°C (Example 1) and a co-polymer consisting of D,L-lactide and ε-caprolactone with a glass transition temperature (Tg) of -10°C (Example 2).

Another approach within the same technical field is represented and disclosed by WO 02/076232. This document discloses a branched polymer structure for the purpose of obtaining the desired properties of the polymer.

A problem, related to polyester polymers obtainable by polymerization of cyclic esters of the above-disclosed type, is that such polymers, when used in chewing gum, generally lacks the desired elastomeric properties and may be somewhat difficult to match with conventional well-known polymers.

It is an object of the invention to provide a chewing gum polyester polymer having improved properties suitable for chewing gum.

It is a further object of the invention to provide a chewing gum polyester polymer having improved elastomeric properties suitable for chewing gum.

### SUMMARY OF THE INVENTION

The present invention relates to chewing gum comprising at least one chewing gum polyester polymer, wherein at least a first part of said polyester polymer is obtainable by condensation polymerization and at least a further part of said polyester polymer is obtainable by ring-opening polymerization.

According to an embodiment of the invention, the individual first and further parts of the polyester polymer may form somewhat continuous parts or blocks of the polymer chain. According to a further embodiment of the invention, the first and further parts of the polyester polymer may appear somewhat more intermittent with respect to each other, meaning that the polymer chain may comprise the first and further parts interchangeably and/or in randomized order.

According to the invention, advantageous features of both the first and further part of the polyester polymer may be paired, and a resulting polyester polymer may be obtained having properties relevant for chewing gum which were out of reach when applying pure polymers of the two types.

One advantageous property of a polyester according to an embodiment of the invention is that the advantageous elastomeric properties recognized in connection with polyester obtainable by condensation polymerization may be optimized with respect to biodegradability when incorporating monomers comprising cyclic esters, cyclic carbonates, carboxylic acids, alcohols, or combinations thereof in the polymer chain(s).

In an embodiment of the invention, said at least one polyester polymer is at least partly biodegradable.

The biodegradability of the polyester polymer of the present invention, may be comparable to the biodegradability of prior art biodegradable polyester polymers, as it is basically comprised of the same or corresponding monomer types.

In an embodiment of the invention, said condensation polymerization is based on di-functional monomers selected from the group of alcohols and acids.

Advantageous features of the first part of the polymer comprises advantageous elastomeric properties, advantageous amorph performance at low Tg and advantageous compatibility with polymers, both biodegradable or conventional, which may be applied in a chewing gum polymer system. In this context it should be noted that a chewing gum polymer system may comprise quite complex structures where one polymer is specifically dedicated for the purpose of matching another polymer or other polymers; e.g. one polymer may be plasticizing one or more other polymers.

In an embodiment of the invention, the monomers include di-functional alcohols or esters thereof and di-functional aliphatic or aromatic carboxylic acids or esters thereof. Moreover, also hydroxy acids or anhydrides and halides of polyfunctional carboxylic acids may be used as monomers.

In an embodiment of the invention, said condensation polymerization is based on di-functional monomers selected from the group of alcohols, carboxylic acids, hydroxycarboxylic acids, or derivatives thereof.

According to a preferred embodiment of the invention, alcohols and carboxylic acids forms the basis of the first part of the polyester.

In an embodiment of the invention, said ring-opening polymerization is based on cyclic ester monomers, cyclic carbonate monomers or combinations thereof.

According to the invention, the further part of the polymer may be formed on the basis of cyclic esters, cyclic carbonates or combinations thereof, thereby obtaining advantages such as higher Tg. Moreover, an advantageous biodegradability with well documented residues may be obtained, which is quite important when considering both environmental and health due to the fact that such residues may ultimately appear both in the environment during degradation of the chewing gum polymer and even, in some degree, in the mouth of a user. In this context it should also be noted that polymers of the further part type has also proved compatibility with other polymers of a chewing gum system.

At least one of said monomers is di-functional.

When one or more di-functional compounds, i.e. compounds containing two functional groups in each molecule, are applied as monomers an advantageous embodiment of the invention is obtained because such difunctional compounds may impart linear and crystalline parts in the polymer.

In an embodiment of the invention, the molar ratio between the monomers forming said first and further part of the polyester polymer is within the range of 1:1000 and 1000:1 by weight.

In an embodiment of the invention, the monomers forming said first part of the polyester polymer comprises a molar content within the range of 1 to 99% of said polyester polymer.

Thus, in an embodiment of the invention, said first part of the polyester polymer comprises a molar content within the range of 1 to 99% of said polyester polymer.

In an embodiment of the invention, the monomers forming said further part of the polyester polymer comprises a molar content within the range of 1 to 99% of said polyester polymer.

Thus, in an embodiment of the invention, said further part of the polyester polymer comprises a molar content within the range of 1 to 99% of said polyester polymer.

In an embodiment of the invention, said at least one chewing gum polyester polymer forms the sole polymer of the chewing gum.

According to an embodiment of the invention, the chewing gum polyester polymer of the present invention may be described as a hybrid polyester polymer and may form the sole polymer of the chewing gum due to the fact that the polymer per se may comprise the desired hybrid functionality of a given chewing gum system.

In an embodiment of the invention, said first part of the at least one polyester polymer comprises a molar content within the range of 30 to 90%, preferably within the range of 50 to 70% of said polyester polymer.

In an embodiment of the invention, said first part of the polyester polymer comprises within the range of 30 to 90%, preferably within the range of 50 to 70% by weight of said polyester polymer.

In an embodiment of the invention, the molar ratio or the weight ratio between the first part of the polyester polymer and further part of the polyester polymer is in the range of 30:70 to 90:10, whereby the polyester polymer may be provided with a combination of elastomer and elastomer plasticizing properties. In other words the polyester polymer may be applicable as an elastomeric and at the same time resinous compound in the chewing gum of the invention.

In an embodiment of the invention, said at least one chewing gum polyester polymer forms one of further polymers of the chewing gum.

In an embodiment of the invention, the further polymers may be any conventional chewing gum polymers, biodegradable as well as substantially non-degradable, such as conventional synthetic or natural resins and elastomers.

In an embodiment of the invention, said at least one chewing gum polyester polymer forms one of further polyester polymers of the chewing gum.

In an embodiment of the invention, the further polyester polymer may be a further hybrid chewing gum polyester polymer according to the invention, or alternatively a conventional polyester polymer obtained by either condensation polymerization or ring-opening polymerization.

Thus, in an embodiment of the invention, the chewing gum of the present invention may additionally to the abovementioned hybrid polyester polymer(s) comprising a first and further part, moreover comprise one or more prior art biodegradable polymers, such as e.g. those disclosed in WO 02/076230, WO 2004/028269, WO 02/076227, WO 02/076228, WO 2004/028265, WO 2004/028269, and WO 2004/028270.

In an embodiment of the invention, said first part of the at least one polyester polymer comprises a molar content within the range of 1 to 70%, preferably within the range of 20 to 60% of said polyester polymer.

In an embodiment of the invention, said first part of the polyester polymer comprises within the range of 1 to 70%, preferably within the range of 20 to 60% by weight of said polyester polymer.

In an embodiment of the invention, the molar ratio or the weight ratio between the first part of the polyester polymer and further part of the polyester polymer is in the range of 1:99 to 70:30, whereby the polyester polymer may be provided with elastomer plasticizing properties. In other words the polyester polymer may be applicable as a resinous compound in the chewing gum of the invention, which may further comprise a resinous compound.

In an embodiment of the invention, said first part of the at least one polyester polymer comprises a molar content within the range of 40 to 99%, preferably within the range of 50 to 90% of said polyester polymer.

In an embodiment of the invention, said first part of the polyester polymer comprises within the range of 40 to 99%, preferably within the range of 50 to 90% by weight of said polyester polymer.

In an embodiment of the invention, the molar ratio or the weight ratio between the first part of the polyester polymer and further part of the polyester polymer is in the range of 40:60 to 99:1, whereby the polyester polymer may be provided with elastomer properties. In other words the polyester polymer may be applicable as an elastomeric compound in the chewing gum of the invention.

In an embodiment of the invention, said at least one polyester polymer comprises a polyester selected from the group comprising copolymers, terpolymers, quaterpolymer, graftpolymers, blockpolymers, randomized polymers, and combinations thereof.

In an embodiment of the invention, said at least one polyester polymer comprises a block copolymer or a randomized copolymer.

In an embodiment of the invention, said at least one polyester copolymer has at least two glass transition temperatures.

A glass transition temperature refers herein to the average temperature in a glass transition temperature range.

In an embodiment of the invention, the chewing gum polyester polymer may have two glass transition temperatures as measured by dynamic mechanical analysis (DMA), while the same polymer may seem to have only one glass transition temperature as measured by differential scanning calorimetry (DSC).

In an embodiment of the invention, said at least one polyester copolymer has a single glass transition temperature.

In an embodiment of the invention, said di-functional alcohol monomers are selected from the group comprising glycols and polyglycols.

In an embodiment of the invention, said di-functional alcohol monomers contain 2 to 100 carbon atoms in the main chain.

In an embodiment of the invention, said di-functional alcohol monomers are selected from the group comprising ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, pentaerythritol, sorbitol, mannitol, and mixtures thereof.

In an embodiment of the invention, said di-functional carboxylic acid monomers are selected from the group comprising saturated, unsaturated, aliphatic, or aromatic polyfunctional carboxylic acids, or combinations thereof.

In an embodiment of the invention, said di-functional carboxylic acid monomers contain 2 to 100 carbon atoms, preferably 4 to 18 carbon atoms in the main chain.

In an embodiment of the invention, said di-functional carboxylic acid monomers are selected from the group comprising oxalic acid, malonic acid, succinic acid, malic acid, tartaric acid, fumaric acid, maleic acid, glutaric acid, glutamic acid, adipic acid, glucaric acid, pimelic acid, suberic acid, azelaic acid, sebacic acid, dodecanedioic acid acid, cyclopropane dicarboxylic acid, cyclobutane dicarboxylic acid, cyclohexane dicarboxylic acid, terephthalic acid, isophthalic acid, phthalic acid, naphthalene 1,4-, 2,3-, 2,6-dicarboxylic acids, and mixtures thereof.

In an embodiment of the invention, said di-functional carboxylic acid derivative monomers are selected from the group comprising hydroxy acids, esters, anhydrides, or halides of carboxylic acids, and mixtures thereof.

In an embodiment of the invention, said di-functional carboxylic acid derivative monomers are selected from the group comprising 3-hydroxy propionic acid, 6-hydroxycaproic acid, dimethyl or diethyl oxalate, dimethyl or diethyl malonate, dimethyl or diethyl succinate, dimethyl or diethyl fumarate, dimethyl or diethyl maleate, dimethyl or diethyl glutarate, dimethyl or diethyl adipate, dimethyl or diethyl pimelate, dimethyl or diethyl suberate, dimethyl or diethyl azelate, dimethyl or diethyl sebacate, dimethyl or diethyl dodecanedioate, dimethyl or diethyl terephthalate, dimethyl or diethyl isophthalate, dimethyl or diethyl phthalate, and mixtures thereof.

In an embodiment of the invention, said ring-opening polymerisation is based on cyclic monomers selected from the group comprising glycolides, lactides, lactones, cyclic carbonates or mixtures thereof.

In an embodiment of the invention, said lactide monomers are selected from the group comprising L-lactide, D,L-lactide, and mesolactide, or combinations thereof.

In an embodiment of the invention, said lactone monomers are selected from the group comprising ε-caprolactone, δ-valerolactone, γ-butyrolactone, and β-propiolactone, or mixtures thereof.

In an embodiment of the invention, said cyclic carbonate monomers are selected from the group comprising trimethylene carbonates, dioxanones, ethylene carbonates, propylene carbonates, monocabonates, dioxepanones, or mixtures thereof.

In an embodiment of the invention, said chewing gum comprises one or more chewing gum ingredients selected from the group comprising flavoring agents, sweetening agents, fillers, softeners, emulsifiers, and active ingredients.

In an embodiment of the invention, said flavoring agents comprise natural and synthetic flavorings in the form of natural vegetable components, essential oils, essences, extracts, powders, including acids and other substances capable of affecting the taste profile.

In an embodiment of the invention, said chewing gum comprises flavor in an amount of 0.01 to about 25 wt %, preferably in an amount of 0.1 to about 5 wt %, said percentage being based on the total weight of the chewing gum.

In an embodiment of the invention, the chewing gum comprises at least one softener in an amount of about 0 to about 20 % by weight of the chewing gum, more typically about 0 to about 10 % by weight of the chewing gum.

According to the present invention, softener may advantageously be added to the chewing gum of the present invention in an amount corresponding to the amount used in conventional chewing gum.

In an embodiment of the invention, the softeners may be selected among tallow, hydrogenated tallow, hydrogenated and partially hydrogenated vegetable oils, cocoa butter, glycerol monostearate, glycerol triacetate, lecithin, mono-, di- and triglycerides, acetylated mono- or diglycerides, fatty acids - such as stearic, palmitic, oleic and linoleic acids, waxes, PGE and mixtures thereof.

In an embodiment of the invention, the amount of emulsifier is in the range of 0 to 18 % by weight of the chewing gum.

In different embodiments of the present invention, the chewing gum may be provided either with or without emulsifier.

In an embodiment of the invention, said sweetening agents are selected from the group comprising bulk sweeteners, and high intensity sweeteners, and combinations thereof.

In an embodiment of the invention, the chewing gum comprises sugar.

In an embodiment of the invention, the chewing gum is sugar free.

In an embodiment of the invention, said bulk sweeteners comprises an amount of about 5 to about 95%, preferably about 20 to about 80% by weight of the chewing gum.

According to the invention, the bulk sweeteners may be sugar sweeteners, non-sugar sweeteners and combinations thereof.

In an embodiment of the invention, the sugar sweeteners may comprise saccharide-containing compounds such as sucrose, dextrose, maltose, dextrins, trehalose, D-tagatose, dried invert sugar, fructose, levulose, galactose, corn syrup solids, alone or in combination.

Moreover, in an embodiment of the invention, the non-sugar sweeteners may comprise sugar alcohols such as sorbitol, mannitol, xylitol, hydrogenated starch hydrolysates, maltitol, isomaltol, erythritol, lactitol, alone or in combination.

In an embodiment of the invention, the chewing gum comprises high intensity sweeteners in an amount of about 0 to about 1.2 %, preferably about 0.1 to about 0.6 % by weight of the chewing gum.

In an embodiment of the invention, the high intensity sweeteners may comprise sucralose, aspartame, salts of acesulfame, alitame, neotame, twinsweet, saccharin and its salts, cyclamic acid and its salts, glycyrrhizin, dihydrochalcones, thaumatin, monellin, stevioside, alone or in combination

In an embodiment of the invention, the chewing gum comprises filler in an amount of about 0 to about 50% by weight of the chewing gum, more typically about 10 to about 40 % by weight of the chewing gum.

In an embodiment of the invention, the chewing gum comprises at least one coloring agent.

In an embodiment of the invention, said chewing gum ingredients comprise active ingredients.

In an embodiment of the invention, the active ingredients may be selected among medicines, oral compositions, anti-smoking agents, highly potent sweeteners, pH adjusting agents, nutritients, antiseptics, minerals, agents for care or treatment of the oral cavity and the teeth, dietary supplements, other active ingredients and combinations thereof.

In an embodiment of the invention, said chewing gum is coated with an outer coating selected from the group comprising hard coating, soft coating and edible film-coating.

The outer coating may be a sugar coating or a sugarless coating or a combination thereof.

In an embodiment of the invention, the outer coating is a hard coating comprising at least 50 % by weight of a polyol selected from the group comprising sorbitol, maltitol, mannitol, xylitol, erythritol, lactitol and isomalt.

In a further embodiment of the invention, the edible film-coating comprises at least one component selected from the group comprising wax and an edible film-forming agent such as a cellulose derivative, a modified starch, a dextrin, gelatine, shellac, gum arabic, zein, a vegetable gum, a synthetic polymer and any combination thereof.

In an embodiment of the invention, the outer coating comprises at least one additive component selected from the group comprising a binding agent, a moisture absorbing component, a film forming agent, a dispersing agent, an antisticking component, a bulking agent, a flavouring agent, a coloring agent, a pharmaceutically or cosmetically active component, a lipid component, a wax component, a sugar, an acid and an agent capable of accelerating the after-chewing degradation of the degradable polymers.

In an embodiment of the invention, the agent capable of accelerating after-chewing degradation of the degradable polymers may be one or more enzymes selected among those mentioned in PCT/DK2003/000939 (WO-A- 2005/063037).

In an embodiment of the invention, said chewing gum polyester polymer is obtainable by said condensation polymerization performed first and said ring-opening polymerization performed afterwards.

The resulting chewing gum polyester polymers are unique compared to those polyester polymers, which may by obtained by either condensation polymerization or ring-opening polymerization alone.

The uniqueness is based on the fact that combinations of monomers may be prepared that are not or only with difficulty obtainable by either type of polymerization alone.

According to an embodiment of the present invention, chewing gum polyester polymers featuring advantageous properties may be obtained, when an initial condensation polymerization is followed by a ring-opening polymerization to form a block polymer, wherein at least one of the blocks results from condensation Polymerization and at least two further blocks result from ring-opening polymerization. The at least two last-mentioned blocks may physically be located at two ends of the first block and may in some embodiments be bonded or crosslinked.

In an embodiment of the invention, said chewing gum polyester polymer is obtainable by said condensation polymerization and said ring-opening polymerization performed randomized.

According to an embodiment of the invention, a chewing gum polyester polymer provided by such a randomized polymerization may feature unique elastomeric and/or resinous properties. In some preferred embodiments, the chewing gum polyester polymer provided by randomized condensation and ring- opening polymerization may embody advantageous texture properties for chewing gum purposes.

In an embodiment of the invention, said polyester polymer is obtained by a combination of condensation polymerization and ring-opening polymerization.

In an embodiment of the invention, at least a first part of the monomers of said polyester polymer are polymerized by condensation polymerization, and at least a further part of the monomers of said polyester polymer are polymerized by ring-opening polymerization.

Moreover, the invention relates to a method of obtaining a chewing gum polyester polymer, whereby condensation polymerization and ring-opening polymerization are combined.

Furthermore, the invention relates to a method of obtaining a chewing gum, whereby the polyester polymer is obtained through a combined condensation polymerization and ring-opening polymerization.

In an embodiment of the invention, the polyester polymer is obtained through a combined condensation polymerization and ring-opening polymerization.

In an embodiment of the invention, said condensation polymerization and said ring-opening polymerization are performed subsequently.

The method according to the invention may result in polyester polymers, which are unique compared to those polyester polymers, which may by obtained by either condensation polymerization or ring-opening polymerization alone.

Uniqueness of the resulting polymer is based on the fact that it may comprise combinations of monomers that are not or only with difficulty obtainable by either type of polymerization alone.

In an embodiment of the invention, said condensation polymerization is carried out to prepare a prepolymer, which is afterwards used for initiation of a ring-opening polymerization.

In an embodiment of the invention, it may be an advantage to run the two polymerization reactions subsequently in order to establish optimal process conditions for each type of polymerization. One of the factors, which needs to be controlled, is the temperature. A problem relating to temperature is that some advantageous cyclic compounds would break down if exposed to a temperature high enough to carry out condensation polymerization of some also advantageous alcohols and carboxylic acids. According to an embodiment of the invention, a way to solve this problem is to first carry out a condensation polymerization to a certain degree and then lower the temperature before supplying the cyclic compounds and proceeding with the ring-opening polymerization.

In a further embodiment of the invention, the molecular weight obtained by condensation polymerization is advantageously controlled in order to prepare an oligomer or prepolymer, which is applicable as a macro initiator for the subsequent ring-opening polymerization.

Benefits of using the product from a condensation polymerization as initiator for ring-opening polymerization include: Convenient process, unique possibilities of mixing the two different groups of monomers, preparation of a polymer with alternating regions of monomer units originating from condensation polymerization and ring-opening polymerization, respectively.

The present invention makes it possible to control the features, e.g. crystallinity, of the obtained polymer in a new way by combining the characteristics of polycondensation polyesters and ring-opening polymerization polyesters. In this way, the crystallinity may be adjusted by design of the chain length in the alternating regions of either polyester type.

In an embodiment of the invention, said condensation polymerization and said ring-opening polymerization are performed randomized.

In an embodiment of the invention, advantageous properties of the chewing gum polyester polymer may be obtained, when the two polymerization techniques are performed simultaneously or by and by in a randomized order.

### DETAILED DISCLOSURE

It is a major objective of the present invention to provide a chewing gum polymer, which results in chewing gum products that following chewing are more readily degraded in the environment than conventional chewing gum and furthermore which, relative to chewing gum comprising conventional non-degradable polymers, may be removed more readily mechanically and/or by the use of cleaning agents. The easier elimination of the chewing gum of the present invention may be of great advantage, when the chewing gum is improperly dropped or discarded by users.

According to an embodiment of the invention, the chewing gum comprises one or more polyester polymers, which may be regarded as biodegradable, and hence causes the chewing gum to be more readily degraded and/or removed from surfaces, where it has been dumped.

According to a preferred definition of biodegradability according to the invention, biodegradability is a property of certain organic molecules whereby, when exposed to the natural environment or placed within a living organism, they react through an enzymatic or microbial process, often in combination with a chemical process such as hydrolysis, to form simpler compounds, and ultimately carbon dioxide, nitrogen oxides, methane, water and the like.

In the present context the term 'biodegradable polymers' means environmentally or biologically degradable polymer compounds and refers to chewing gum base components which, after dumping the chewing gum, are capable of undergoing a physical, chemical and/or biological degradation, whereby the dumped chewing gum waste becomes more readily removable from the site of dumping or is eventually disintegrated to lumps or particles, which are no longer recognizable as being chewing gum remnants. The degradation or disintegration of such degradable polymers may be effected or induced by physical factors such as temperature, light, moisture, etc., by chemical factors such as oxidative conditions, pH, hydrolysis, etc. or by biological factors such as microorganisms and/or enzymes. The degradation products may be larger oligomers, trimers, dimers and monomers.

Preferably, the ultimate degradation products are small inorganic compounds such as carbon dioxide, nitrogen oxides, methane, ammonia, water, etc.

As referred to herein, the glass transition temperature (Tg) may be determined by for example DSC (DSC: differential scanning calorimetry). The DSC may generally be applied for determining and studying of the thermal transitions of a polymer and specifically, the technique may be applied for the determination of a second order transition of a material. The transition at Tg is regarded as such a second order transition, i.e. a thermal transition that involves a change in heat capacity, but does not have a latent heat. Hence, DSC may be applied for studying Tg.

Unless otherwise indicated, as used herein with regard to polymers, the term "molecular weight" means number average molecular weight (Mn) in g/mol. Furthermore, as used herein the short form PD designates the polydispersity of polymers, polydispersity being defined as Mw /Mn , where Mw is the weight average molecular weight of a polymer. A well-established technique for characterization of biodegradable polymers is gel permeation chromatography (GPC).

In general, a chewing gum composition typically comprises a water-soluble bulk portion, a water-insoluble chewable gum base portion and flavouring agents. The water-soluble portion dissipates with a portion of the flavouring agent over a period of time during chewing. The gum base portion is retained in the mouth throughout the chew. The term chewing gum refers to both a chewing and bubble type gum in its general sense.

The gum base is the masticatory substance of the chewing gum, which imparts the chew characteristics to the final product. The gum base typically defines the release profile of flavors and sweeteners and plays a significant role in the gum product.

The insoluble portion of the gum typically may contain any combination of elastomers, vinyl polymers, elastomer plasticizers, waxes, softeners, fillers and other optional ingredients such as colorants and antioxidants.

The composition of gum base formulations can vary substantially depending on the particular product to be prepared and on the desired masticatory and other sensory characteristics of the final product. However, typical ranges (% by weight) of the above gum base components are: 5 to 80% by weight elastomeric compounds, 5 to 80% by weight elastomer plasticizers, 0 to 40% by weight of waxes, 5 to 35% by weight softener, 0 to 50% by weight filler, and 0 to 5% by weight of miscellaneous ingredients such as antioxidants, colourants, etc.

Elastomers provide the rubbery, cohesive nature to the gum, which varies depending on this ingredient's chemical structure and how it may be compounded with other ingredients. Elastomers suitable for use in the gum base and gum of the present invention may include natural or synthetic types.

Elastomer plasticizers vary the firmness of the gum base. Their specificity on elastomer inter-molecular chain breaking (plasticizing) along with their varying softening points cause varying degrees of finished gum firmness and compatibility when used in base. This may be important when one wants to provide more elastomeric chain exposure to the alkanic chains of the waxes.

According to an embodiment of the invention, the polyester polymer of the present invention may substitute or supplement conventional non-degradable elastomers and/or elastomer plasticizers in chewing gum. The fundamental characteristics of the polyester polymer of the present invention render it possible to achieve a polymer embracing both elastomeric and resinous properties in the same polymer, or alternatively to promote either elastomeric or resinous properties in separate polymers, each of which are variations of the polyester polymer of the present invention.

According to an embodiment of the invention, one or more polyester polymers of the present invention may replace natural resins and elastomers, and may also substitute conventional synthetic resins and elastomers.

Without being limited to theory, it is believed that one suitable strategy for creation of biodegradable polymers, which may substitute conventional either elastomers or resins, may be to prepare polyester polymers of the present invention with molecular weights and glass transition temperatures equivalent to the conventional elastomers or resins, which are to be replaced in the chewing gum of the present invention.

A preferred conventional chewing gum elastomer to replace may e.g. be a synthetic elastomer, such as polyisobutylene (PIB) of molecular weight (Mn) about 30000 g/mol to 120000 g/mol and Tg about -20 to -70 °C.

Correspondingly, a preferred conventional chewing gum elastomer plasticizer to replace may be the synthetic resin, low molecular weight polyvinyl acetate (PVA) of molecular weight (Mn) about 2000 - 15000 g/mol and Tg about 20-35 °C.

A further suitable strategy according to an embodiment of the invention may be the creation of single polymers of the present invention having both resinous and elastomeric properties. This is a possibility arising from the fact, that the polyester polymer of the present invention is polymerized by two different polymerization techniques following each other. Such a polyester polymer of the present invention possessing both elastomeric and elastomer plasticizing properties may therefore substitute a resinous and an elastomeric compound at the same time.

As a result, a chewing gum may according to an embodiment of the invention be created on the basis of one single polyester polymer of the present invention.

In another embodiment of the invention, the resulting chewing gum may comprise the inventive chewing gum polyester polymer along with an unconventionally small amount of individual elastomers and/or resins.

A chewing gum polyester polymer of the present invention having features substituting resinous as well as elastomeric compounds, herein sometimes referred to as a hybrid polyester polymer, may in an embodiment of the invention have intermediate Tg and molecular weight with respect to the Tg and molecular weights of conventional elastomers or resins alone. In an alternative embodiment, the hybrid polymer may have more than one Tg resulting from the different parts in the polymer.

Generally, the chewing gum of the present invention may comprise one or more chewing gum polyester polymers, and each of these polyester polymers may comprise a first and a further part. The first part may be obtained from condensation polymerization, while the further part may be obtained from ring-opening polymerization. According to an embodiment of the invention, the first and further parts may be recognized as blocks in the chewing gum polyester polymer, or alternatively as regions, monomers and/or residues of the first and further part located randomized throughout the polyester polymer.

The first part of the chewing gum polyester polymers of the invention may thus be recognized as originating from condensation polymerization and they may comprise elastomeric properties, which may impart an elastomeric function in the chewing gum. Similarly, the further part of the polyester polymer, i.e. the part originating from ring-opening polymerization, may comprise elastomer plasticizing properties, which may impart a resinous-like function in the chewing gum. Consequently, such a polyester polymer comprising a first and further part as described may bring about outstanding opportunities within the art of biodegradable chewing gum. Excellent properties of the chewing gum may be obtained when applying at least one of these hybrid polyester polymers comprising both elastomeric and resinous properties.

According to an embodiment of the invention, the first part of the chewing gum polyester polymer may be prepared through reaction of at least one alcohol or derivative thereof and at least one acid or derivative thereof.

Generally, according to an embodiment of the invention, the first part of the chewing gum polyester polymer may be prepared by step-growth polymerization of di - functional alcohols or esters thereof with di -functional aliphatic or aromatic carboxylic acids or esters thereof. Likewise, also hydroxy acids or anhydrides and halides of polyfunctional carboxylic acids may be used as monomers. The polymerization of the first part of the chewing gum polyester polymer of the present invention may involve direct polyesterification or transesterification and may be catalyzed. Mixing of dissimilar monomer units, along the chain suppresses crystallinity. To control the reaction and the molecular weight of the first part of the chewing gum polyester polymer according to the invention, it is possible to stop the polymer chains by addition of monofunctional alcohols or acids and/or to utilize a stoichiometric imbalance between acid groups and alcohol groups or derivatives of either. Furthermore, the polymerization reaction may be continued with a ring-opening polymerization by the supply of cyclic monomers and reaction conditions as outlined and exemplified herein to form a further part of the chewing gum polyester polymer of the present invention. Hereby a hybrid polyester polymer may be prepared, which along the chains comprises repeating units originating from both acids, alcohols and cyclic monomers.

In an embodiment of the invention, the polymerization process may be followed by at least a partial endcapping of the free hydroxyl and carboxyl groups by monofunctional compounds.

In general, di-functional carboxylic acids, which according to the present invention may be part of the monomers forming the first part of the chewing gum polyester polymer of the invention, are high-melting solids that have very limited solubility in the polycondensation reaction medium. Often esters or anhydrides of the di-functional carboxylic acids may be used to overcome this limitation. Polycondensations involving carboxylic acids or anhydrides produce water as the condensate, which requires high temperatures to be driven off. Thus, polycondensations involving transesterification of the ester of a di-functional acid are often the preferred process. For example, the dimethyl ester of terephthalic acid may be used instead of terephthalic acid itself. In this case, methanol rather than water is condensed, and the former can be driven off more easily than water. In addition to an ester derivative an anhydride or a halide of the carboxylic acid may also be used under certain circumstances.

In an embodiment of the invention, the reaction forming the first part of the polyester polymer of the present invention may usually be carried out in the bulk (no solvent). High temperatures and vacuum may be used to remove the by-product and drive the reaction to completion or to a desired intermediate state forming a suitable starting point for the ring-opening polymerization forming the further part of the chewing gum polyester polymer of the present invention. Because of the cyclic monomers such as lactide or glycolide being especially temperature sensitive, the temperature in the reaction medium must be carefully controlled in order to avoid a temperature increase above the damaging temperature limit existing for certain applied cyclic monomers, while these cyclic monomers are present in the reaction medium.

In general, for preparation of the first part of the chewing gum polyester polymer of the present invention, the preferred di-functional carboxylic acids or derivatives thereof are either saturated or unsaturated aliphatic or aromatic and contain 2 to 100 carbon atoms and more preferably 4 to 18 carbon atoms. In the polymerization of the first part of the chewing gum polyester polymer of the present invention some applicable examples of carboxylic acids, which may be employed as such or as derivatives thereof, include aliphatic di-functional carboxylic acids such as oxalic, malonic, succinic, malic, tartaric, fumaric, maleic, glutaric, glutamic, adipic, glucaric, pimelic, suberic, azelaic, sebacic, dodecanedioic acid, etc. and cyclic aliphatic polyfunctional carboxylic acids such as cyclopropane dicarboxylic acid, cyclobutane dicarboxylic acid, cyclohexane dicarboxylic acid, etc. and aromatic polyfunctional carboxylic acids such as terephthalic, isophthalic, phthalic, and naphthalene 1,4-, 2,3-, 2,6-dicarboxylic acids and the like. For the purpose of illustration and not limitation, some examples of carboxylic acid derivatives include hydroxy acids such as 3-hydroxy propionic acid and 6-hydroxycaproic acid and anhydrides, halides or esters of acids, for example dimethyl or diethyl esters, corresponding to the already mentioned acids, which means esters such as dimethyl or diethyl oxalate, malonate, succinate, fumarate, maleate, glutarate, adipate, pimelate, suberate, azelate, sebacate, dodecanedioate, terephthalate, isophthalate, phthalate, etc. Generally speaking, methyl esters are sometimes more preferred than ethyl esters due to the fact that higher boiling alcohols are more difficult to remove than lower boiling alcohols.

Moreover, for preparation of the first part of the chewing gum polyester polymer of the present invention, the usually preferred di-functional alcohols contain 2 to 100 carbon atoms as for instance polyglycols. In the polymerization process of the first part of the chewing gum polyester polymer of the present invention some applicable examples of alcohols, which may be employed as such or as derivatives thereof, includes polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, pentaerythritol, sorbitol, mannitol, etc. For the purpose of illustration and not limitation, some examples of alcohol derivatives include glycerol palmitate, glycerol sebacate, glycerol adipate, etc.

Additionally, with regard to polymerization of the first part of the chewing gum polyester polymer of the present invention, the chain-stoppers sometimes used are monofunctional compounds. They are preferably either mono alcohols containing 1-20 carbon atoms or monocarboxylic acids containing 2-26 carbon atoms. General examples are medium or long-chain fatty alcohols or acids, and specific examples include mono alcohols such as methanol, ethanol, butanol, hexanol, octanol, etc. and lauryl alcohol, myristyl alcohol, cetyl alcohol, stearyl alcohol, stearic alcohol, etc. and monocarboxylic acids such as acetic, lauric, myristic, palmitic, stearic, arachidic, cerotic, dodecylenic, palmitoleic, oleic, linoleic, linolenic, erucic, benzoic, naphthoic acids and substituted napthoic acids, 1-methyl-2 naphthoic acid and 2-isopropyl-1-naphthoic acid, etc.

In an embodiment of the invention, an acid catalyst or a transesterification catalyst is used in the polymerization of the first part of the chewing gum polyester polymer of the present invention, and non-limiting examples of those are the metal catalysts such as acetates of manganese, zinc, calcium, cobalt or magnesium, and antimony-(III)oxide, germanium oxide or halide and tetraalkoxygermanium, titanium alkoxide, zinc or aluminum salts.

According to an embodiment of the invention, the further part of the chewing gum polyester polymer may be prepared from at least one or more cyclic monomers such as glycolides, lactides, lactones, cyclic carbonates or mixtures thereof.

According to an embodiment of the invention, the lactides may include L-lactide, D,L-lactide, and mesolactide. Likewise, the lactone monomers may be chosen among ε-caprolactone, δ-valerolactone, γ-butyrolactone, and β-propiolactone. The lactones may further include ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom.

Furthermore, in an embodiment of the invention, the carbonate monomers may be selected from the following group: Trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

The polymerization process of the further part of the chewing gum polyester polymer of the present invention may take place in the presence of at least one appropriate catalyst such as metal catalysts, of which stannous octoate is a non-limiting example. Moreover the polymerization of the further part of the chewing gum polyester polymer of the present invention may be initiated by initiators such as polyols, polyamines or other molecules with multiple hydroxyl or other reactive groups and mixtures thereof. Yet, in a preferred embodiment of the invention, the polymerization of the further part of the chewing gum polyester polymer of the present invention may be initated by a prepolymer, which is polymerized by polycondensation, and which may form the first part of the chewing gum polyester polymer of the present invention.

In accordance with the general principles in manufacturing a chewing gum within the scope of the invention, variations of different suitable ingredients are listed and explained below.

The chewing gum according to the invention may comprise coloring agents. According to an embodiment of the invention, the chewing gum may comprise color agents and whiteners such as FD&C-type dyes and lakes, fruit and vegetable extracts, titanium dioxide and combinations thereof.

Further useful chewing gum base components include antioxidants, e.g. butylated hydroxytoluene (BHT), butyl hydroxyanisol (BHA), propylgallate and tocopherols, and preservatives.

In an embodiment of the invention, the chewing gum comprises softeners in an amount of about 0 to about 18% by weight of the chewing gum, more typically about 0 to about 12% by weight of the chewing gum.

Softeners/emulsifiers may according to the invention be added both in the chewing gum and the gum base.

A gum base formulation may, in accordance with the present invention, comprise one or more softening agents e.g. sucrose esters including those disclosed in WO 00/25598, which is incorporated herein by reference, tallow, hydrogenated tallow, hydrogenated and partially hydrogenated vegetable oils, cocoa butter, degreased cocoa powder, glycerol monostearate, glyceryl triacetate, lecithin, mono-, di- and triglycerides, acetylated monoglycerides, fatty acids (e.g. stearic, palmitic, oleic and linoleic acids) and combinations thereof. As used herein the term "softener" designates an ingredient, which softens the gum base or chewing gum formulation and encompasses waxes, fats, oils, emulsifiers, surfactants and solubilisers.

To soften the gum base further and to provide it with water-binding properties, which confer to the gum base a pleasant smooth surface and reduce its adhesive properties, one or more emulsifiers is/are usually added to the composition, typically in an amount of 0 to 18% by weight, preferably 0 to 12% by weight of the gum base. Mono- and diglycerides of edible fatty acids, lactic acid esters and acetic acid esters of mono- and diglycerides of edible fatty acids, acetylated mono and diglycerides, sugar esters of edible fatty acids, Na-, K-, Mg- and Ca-stearates, lecithin, hydroxylated lecithin and the like are examples of conventionally used emulsifiers which can be added to the chewing gum base. In case of the presence of a biologically or pharmaceutically active ingredient as defined below, the formulation may comprise certain specific emulsifiers and/or solubilisers in order to disperse and release the active ingredient.

Waxes and fats are conventionally used for the adjustment of the consistency and for softening of the chewing gum base when preparing chewing gum bases. In connection with the present invention, any conventionally used and suitable type of wax and fat may be used, such as for instance rice bran wax, polyethylene wax, petroleum wax (refined paraffin and microcrystalline wax), paraffin, beeswax, carnauba wax, candelilla wax, cocoa butter, degreased cocoa powder and any suitable oil or fat, as e.g. completely or partially hydrogenated vegetable oils or completely or partially hydrogenated animal fats.

In an embodiment of the invention, the chewing gum comprises filler.

A chewing gum base formulation may, if desired, include one or more fillers/texturisers including as examples, magnesium and calcium carbonate, sodium sulphate, ground limestone, silicate compounds such as magnesium and aluminum silicate, kaolin and clay, aluminum oxide, silicium oxide, talc, titanium oxide, mono-, di- and tri-calcium phosphates, cellulose polymers, such as wood, and combinations thereof.

In an embodiment of the invention, the chewing gum comprises filler in an amount of about 0 to about 50% by weight of the chewing gum, more typically about 10 to about 40% by weight of the chewing gum.

In addition to a water insoluble gum base portion, a typical chewing gum includes a water soluble bulk portion and one or more flavouring agents. The water-soluble portion may include bulk sweeteners, high intensity sweeteners, flavouring agents, softeners, emulsifiers, colours, acidulants, fillers, antioxidants, and other components that provide desired attributes.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, com syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, neotame, twinsweet, saccharin and its salts, cyclamic acid and its salts, glycyrrhizin, dihydrochalcones, thaumatin, monellin, stevioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve the desired release characteristics. Encapsulation of sweetening agents can also be provided using another chewing gum component such as a resinous compound.

Usage level of the high intensity artificial sweetener will vary considerably and will depend on factors such as potency of the sweetener, rate of release, desired sweetness of the product, level and type of flavor used and cost considerations. Thus, the active level of high potency artificial sweetener may vary from about 0 to about 8 % by weight, preferably 0.001 to about 5 % by weight. When carriers used for encapsulation are included, the usage level of the encapsulated sweetener will be proportionately higher.

Combinations of sugar and/or non-sugar sweeteners can be used in the chewing gum formulation processed in accordance with the invention. Additionally, the softener may also provide additional sweetness such as aqueous sugar or alditol solutions.

If a low-calorie gum is desired, a low-caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low-calorie bulking agents can be used.

The chewing gum according to the present invention may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from about 3 µm to 2 mm, such as from 4 µm to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range of 0.2 to 3% by weight of the total composition.

In an embodiment of the invention, the flavoring agents comprise natural and synthetic flavorings in the form of natural vegetable components, essential oils, essences, extracts, powders, including acids and other substances capable of affecting the taste profile.

Further chewing gum ingredients, which may be included in the chewing gum according to the present invention, include surfactants and/or solubilisers, especially when pharmaceutically or biologically active ingredients are present. As examples of types of surfactants to be used as solubilisers in a chewing gum composition according to the invention, reference is made to H.P. Fiedler, Lexikon der Hilfstoffe fur Pharmacie, Kosmetik und Angrenzende Gebiete, pages 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient, the chewing gum may preferably also comprise a carrier known in the art.

Emulsifiers, which are used as softeners may include tallow, hydrogenated tallow, hydrogenated and partially hydrogenated vegetable oils, cocoa butter, glycerol monostearate, glycerol triacetate, lechithin, mono-, di-and triglycerides, acetylated monoglycerides, fatty acids (e.g. stearic, palmitic, oleic and linoleic acids), and combinations thereof.

According to an embodiment of the invention, the chewing gum may comprise a pharmaceutically, cosmetically or biologically active substance. Examples of such active substances, a comprehensive list of which is found e.g. in WO 00/25598, which is incorporated herein by reference,

The active agents to be used in connection with the present invention may be any substance desired to be released from the chewing gum. If an accelerated rate of release is desired, corresponding to the effect obtained for the flavor, the primary substances are those with limited water solubility, typically below 10g /100 ml including substances which are entirely water insoluble. Examples are medicines, dietary supplements, oral compositions, anti-smoking agents, highly potent sweeteners, pH adjusting agents, etc.

Further examples of active ingedients include paracetamol, benzocaine, cinnarizine, menthol, carvone, coffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B 12, folinic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutritients acccepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminium salts, (for instance aluminium potassium sulfate AIK (S04) 2, 12H20) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent. Res. Vol. 28 No. 2, page 160-171,1949, wherein a wide range of tested compounds are mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

Further examples of active agents are medicines of any type.

Examples of active agents in the form of medicines include coffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 367-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminium fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B 12, Folin acid, niacin, Pantothensyre, biotine, C, D, E, K.

Minerals include Calcium, phosphor, magnesium, iron, Zink, Cupper, lod, Mangan, Crom, Selene, Molybden. Other active ingredients include:Q10@, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

Active ingredients may comprise the below-mentioned compounds or derivates thereof but are not limited thereto: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calcium-carbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zinc-salts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminumaminoacetat, Cimetidine, Esomeprazole, Famotidine, Lansoprazole, Magnesiumoxide, Nizatide and or Ratinidine.

In one embodiment of the invention, the flavor may be used as taste masking in chewing gum comprising active ingredients, which by themselves has undesired taste or which alter the taste of the formulation.

The chewing gum may optionally contain usual additives, such as binding agents, acidulants, fillers, coloring agents, preservatives, and antioxidants, for instance butylated hydroxytoluene (BHT), butyl hydroxyanisol (BHA), propylgallate and tocopherols.

Colorants and whiteners may include FD & C-type dyes and lakes, fruit and vegetable extracts, titanium dioxide, and combinations thereof.

Materials to be used for the above-mentioned encapsulation methods for sweeteners might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

In general, chewing gum may be manufactured by sequentially adding the various chewing gum ingredients to a commercially available mixer known in the art. After the initial ingredients have been thoroughly mixed, the chewing gum mass is discharged from the mixer and shaped into the desired form such as by rolling into sheets and cutting into sticks, extruded into chunks or casting into pellets.

Generally, the ingredients may be mixed by first melting the gum base and adding it to the running mixer. Colors, active agents and/or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor have been added.

The entire mixing procedure typically takes from five to fifteen minutes, but longer mixing times may sometimes be required. Those skilled in the art will recognize that many variations of the above described procedure may be followed. Including the one-step method described in US patent application 2004/0115305 hereby incorporated as reference. Chewing gums are formed by extrusion, compression, rolling and may be centre filled with liquids and/or solids in any form.

The chewing gum according to the present invention may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallisable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugarfree soft coating e.g. comprising alternately applying to the centres a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid

A coated chewing gum center according to the invention may have any form, shape or dimension that permits the chewing gum center to be coated using any conventional coating process.

The gum centre of coated chewing gum element according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere, and typically the weight of a gum center may be 0.5 to 7 grams.

The following examples are given for illustration, but not limitation of the invention.

### EXAMPLE 1

### Preparation of elastomer solvent. Hybrid polyester polymer by block-polymerization.

A resin (elastomer solvent) sample was produced via a two-stage process involving a transesterification/polycondensation reaction to synthesize a polyester prepolymer and a subsequent ring-opening polymerization reaction to create the final block copolymer.

The polyester prepolymer was produced using a 4-necked 2 L resin kettle equipped with a heating mantle, overhead stirrer, nitrogen gas inlet tube, thermometer, and distillation head incorporating a graduated receiver for removal and quantification of condensates. To the kettle were charged 126.22 g (0.65 mole) dimethyl terephthalate, 51.15 g (0.35 mole) dimethyl succinate, 68.27 g (1.10 mole) ethylene glycol, and 0.074 g (0.03% w/w of reactants) fascat 9100. Under nitrogen, the mixture was slowly heated with stirring until all components became molten (150-170°C). Heating and stirring were continued at approximately 170°C. at atmospheric pressure under nitrogen, and methanol was continuously distilled until approximately the theoretical amount had been collected. The methanol was drained from the receiver; then a moderate vacuum (100 mm Hg) was applied to begin collection of excess ethylene glycol. The vacuum was gradually increased until a final vacuum of 0.200 mm Hg was achieved. The temperature rose during this period but did not exceed 185°C. The reaction was kept under these conditions until approximately 1.6 mL of EG was collected. Then, the progress of polycondensation was halted by increasing the pressure to atmospheric and removal of the kettle from the heating mantle.

When the reactor contents had cooled to approximately 90°C, a solution containing 200 g (1.39 mole) D,L-lactide dissolved in 360 g anhydrous toluene was charged to the flask. The resin kettle was then submerged in a 90°C constant-temperature silicone oil bath, and the contents were allowed to reach thermal equilibrium. Then, 0.28 g (0.038% w/w of reaction mass) of Sn(OCt)₂ catalyst was introduced into the reactor. Reaction was allowed to proceed with periodic removal of aliquots until SEC analysis of the aliquots showed that the D,L-lactide conversion was above 90 percent. The viscous liquid was allowed to cool to room temperature, and then precipitated into a 10 volume excess of cold, dry methanol. The precipitate was collected by filtration, washed with of cold methanol, and dried under a vacuum at room temperature for 72 h.

Characterization of the product indicated Mₙ = 4,940 g/mole and M_{w} = 9,750 g/mole (gel permeation chromatography with online MALLS detector), and Tg = 30°C (DSC, heating rate 10°C/min).

### EXAMPLE 2

### Preparation of elastomer. Hybrid polyester polymer by block-polymerization.

A polyester prepolymer was produced using a 4-necked 2 L resin kettle equipped with a heating mantle, overhead stirrer, nitrogen gas inlet tube, thermometer, and distillation head incorporating a graduated receiver for removal and quantification of condensates. To the kettle were charged 29.13 g (0.15 mole) dimethyl terephthalate, 148.06 g (0.85 mole) dimethyl adipate, 108.24 g (1.02 mole) di(ethylene glycol) and 0.086 g (0.03% w/w of reactants) fascat 9100. Under nitrogen, the mixture was slowly heated with stirring until all components became molten (150-170°C). Heating and stirring were continued at approximately 170°C at atmospheric pressure under nitrogen, and methanol was continuously distilled until approximately the theoretical amount had been collected. The methanol was drained from the receiver; then a moderate vacuum (100 mm Hg) was applied to begin collection of excess ethylene glycol. The vacuum was gradually increased until a final vacuum of 0.200 mm Hg was achieved. The temperature rose during this period but did not exceed 185°C. The reaction was kept under these conditions until production of EG had ceased. Then, the progress of polycondensation was halted by increasing the pressure to atmospheric and removal of the kettle from the heating mantle.

When the reactor contents had cooled to approximately 90°C, a solution containing 73.1 g (0.51 mole) D,L-lactide dissolved in 650 g anhydrous toluene was charged to the flask. The resin kettle was then submerged in a 90°C constant-temperature silicone oil bath, and the contents were allowed to reach thermal equilibrium. Then, 0.36 g (0.038% w/w of reaction mass) of Sn(Oct)₂ catalyst was introduced into the reactor. Reaction was allowed to proceed with periodic removal of aliquots until SEC analysis of the aliquots showed that the D,L-lactide conversion was above 90 percent. The viscous liquid was allowed to cool to room temperature, and then precipitated into a 10 volume excess of cold, dry methanol. The precipitate was collected by filtration, washed with of cold methanol, and dried under a vacuum at room temperature for 72 h.

Characterization of the product indicated Mₙ = 46,700 g/mole and M_{w} = 93,300 g/mole (gel permeation chromatography with online MALLS detector) and T_{g} = -31 °C (DSC, heating rate 10°C/min).

### EXAMPLE 3

### Preparation of elastomer solvent. Hybrid polyester polymer by randomized polymerization

A resin (elastomer solvent) sample was produced using a 4-necked 1 L resin kettle equipped with an overhead stirrer, nitrogen gas inlet tube, thermometer, and distillation head incorporating a graduated receiver for removal and quantification of condensates. To the kettle were charged, under nitrogen purge, 68.27 g (1.10 mole) ethylene glycol, 180 g (1.25 mole) D,L-lactide, and 0.094 g (0.038% w/w of reaction mass) of Sn(Oct)₂. The resin kettle was submerged in a 130°C constant-temperature silicone oil bath and stirred for 5 h. The kettle was removed from the oil bath and fitted with a heating mantle. To the contents of the kettle were added, under nitrogen purge, 126.22 g (0.65 mole) dimethyl terephthalate, 51.15 g (0.35 mole) dimethyl succinate, and 0.13 g (0.03% w/w of reactants) fascat 9100. (150-170°C). Under nitrogen, the mixture was slowly heated with stirring until all components became molten (150-170°C). Heating and stirring were continued at approximately 170°C at atmospheric pressure under nitrogen, and methanol was continuously distilled until approximately the theoretical amount had been collected. The methanol was drained from the receiver; then a moderate vacuum (100 mm Hg) was applied to begin collection of excess ethylene glycol. The vacuum was gradually increased until a final vacuum of 0.200 mm Hg was achieved. The temperature rose during this period but did not exceed 185°C. The reaction was kept under these conditions until approximately 1.6 mL of EG was collected. Then, the progress of polycondensation was halted by increasing the pressure to atmospheric and discontinuance of heating. The molten polymer was carefully poured into a receiving vessel and used without further purification.

Characterization of the product indicated Mₙ = 5,230 g/mol and M_{w} = 10,500 g/mol and T_{g} = 28°C (DSC, heating rate 10°C/min).

### EXAMPLE 4

### Preparation of elastomer. Hybrid polyester polymer by randomized polymerization

An elastomer sample was produced using a 4-necked 1 L resin kettle equipped with an overhead stirrer, nitrogen gas inlet tube, thermometer, and distillation head incorporating a graduated receiver for removal and quantification of condensates. To the kettle were charged, under nitrogen purge, 108.24 g (1.02 mole) di(ethylene glycol), 65.8 g (0.46 mole) D,L-lactide, and 0.066 g (0.038% w/w of reaction mass) of Sn(Oct)₂. The resin kettle was submerged in a 130°C constant-temperature silicone oil bath and stirred for 5 h. The kettle was removed from the oil bath and fitted with a heating mantle. To the contents of the kettle were added, under nitrogen purge, 29.13 g (0.15 mole) dimethyl terephthalate, 148.06 g (0.85 mole) dimethyl adipate, and 0.11 g (0.03% w/w of reactants) fascat 9100. (150-170°C). Under nitrogen, the mixture was slowly heated with stirring until all components became molten (150-170°C.). Heating and stirring were continued at approximately 170°C at atmospheric pressure under nitrogen, and methanol was continuously distilled until approximately the theoretical amount had been collected. The methanol was drained from the receiver; then a moderate vacuum (100 mm Hg) was applied to begin collection of excess ethylene glycol. The vacuum was gradually increased until a final vacuum of 0.200 mm Hg was achieved. The temperature rose during this period but did not exceed 185°C. The reaction was kept under these conditions until production of EG had ceased. Then, the progress of polycondensation was halted by increasing the pressure to atmospheric and discontinuance of heating. The molten polymer was carefully poured into a receiving vessel and used without further purification.

Characterization of the product indicated Mₙ = 47,100 g/mol and M_{w} = 95,400g/mol and Tg = -30°C (DSC, heating rate 10°C/min).

### EXAMPLE 5

### Preparation of gum bases and chewing gums

Different gum bases are prepared from the above polymers by combining elastomer solvent polymers of examples 1 or 3 with elastomer polymers of examples 2 or 4 as outlined in tables 1 and 2:

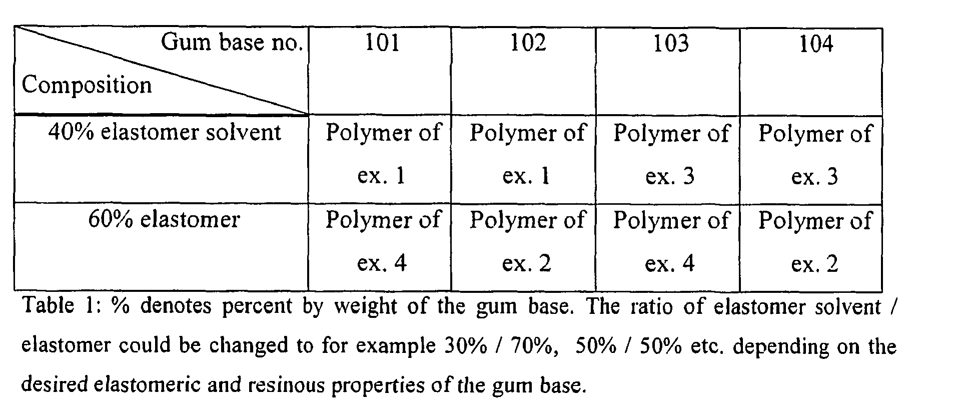

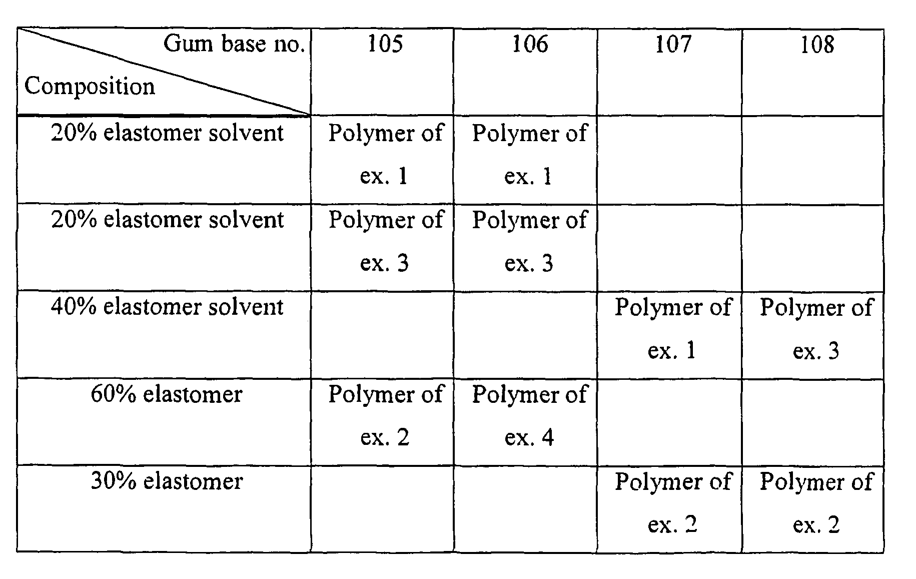

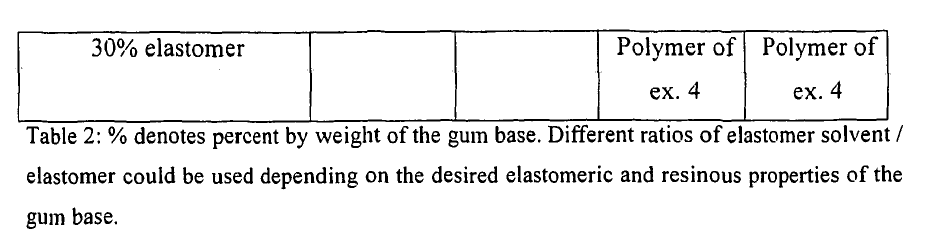

### The gum bases are prepared as follows:

The elastomeric polymer and resinous polymer are added to a mixing kettle provided with mixing means like e.g. horizontally placed Z-shaped arms. The kettle has been preheated for 15 minutes to a temperature of about 60-80°C. The mixture is mixed for 10-20 minutes until the whole mixture becomes homogeneous. The mixture is then discharged into the pan and allowed to cool to room temperature from the discharged temperature of 60-80°C.

The gum bases no. 101, 102, 103, 104, 105, 106, 107, and 108 are used in the different chewing gum formulations shown in table 3:

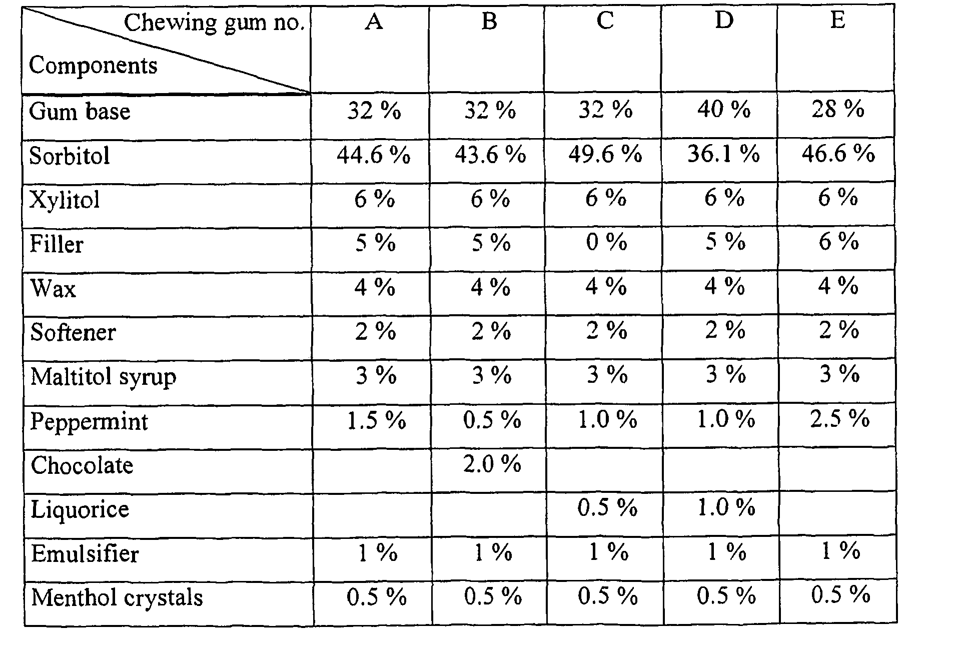

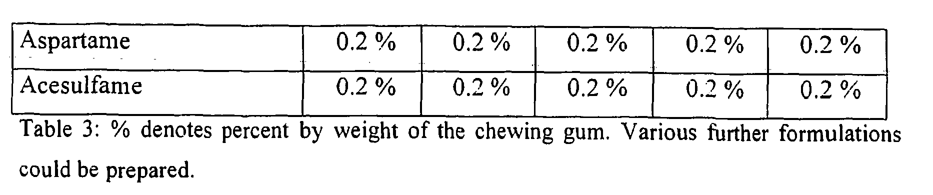

The softeners, emulsifiers and fillers may alternatively be added to the polymers as a part of the gum base preparation.

### The chewing gum products are prepared as follows:

The gum base is added to a mixing kettle provided with mixing means like e.g. horizontally placed Z-shaped arms. The kettle has been preheated for 15 minutes to a temperature of about 40-60°C or the chewing gum is made in one step, immediately after preparation of gum base in the same mixer where the gum base and kettle has a temperature of about 60-80°C.

One half portion of the sorbitol is added together with the gum base and mixed for 3 minutes. Peppermint and menthol are then added to the kettle and mixed for 1 minute. The remaining half portion of sorbitol is added and mixed for 1 minute. Maltitol syrup is added, and then wax and filler may be added and the gum mass is mixed well. Softeners are slowly added and mixed for 7 minutes. Then aspartame and acesulfame are added to the kettle and mixed for 3 minutes. Xylitol is added and mixed for 3 minutes. The resulting gum mixture is then discharged and e.g. transferred to a pan at a temperature of 40-48 °C. The gum is then rolled and scored into cores, sticks, balls, cubes, and any other desired shape, optionally followed by coating and polishing processes prior to packaging.
Evidently, within the scope of the invention, other processes and ingredients may be applied in the process of manufacturing the chewing gum.

The provided chewing gum according to the invention has advantageous textural properties. Moreover, the provided chewing gum is advantageous with respect to both biodegradability and elastomeric properties.

## Claims

1. Chewing gum comprising at least one chewing gum polyester polymer, wherein at least a first part of said polyester polymer is obtainable by condensation polymerization and at least a further part of said polyester polymer is obtainable by ring-opening polymerization,
wherein said at least one chewing gum polyester polymer comprises at least one di-functional monomer and
wherein said at least one di-functional monomer imparts a linear structure in said polyester polymer.

2. Chewing gum according to claim 1, wherein said at least one polyester polymer is at least partly biodegradable.

3. Chewing gum according to any of the claims 1 or 2, wherein said condensation polymerization is based on di-functional monomers selected from the group of alcohols and acids.

4. Chewing gum according to any of the claims 1-3, wherein said condensation polymerization is based on di-functional monomers selected from the group of alcohols, carboxylic acids, hydroxycarboxylic acids, or derivatives thereof.

5. Chewing gum according to any of the claims 1-4, wherein said ring-opening polymerization is based on cyclic ester monomers, cyclic carbonate monomers or combinations thereof.

6. Chewing gum according to any of the claims 1-5, wherein the molar ratio between the monomers forming said first and further part of the polyester polymer is within the range of 1:1000 and 1000:1 by weight.

7. Chewing gum according to any of the claims 1-6, wherein the monomers forming said first part of the polyester polymer comprises a molar content within the range of 1 to 99% of said polyester polymer.

8. Chewing gum according to any of the claims 1-7, wherein the monomers forming said further part of the polyester polymer comprises a molar content within the range of 1 to 99% of said polyester polymer.

9. Chewing gum according to any of the claims 1-8, wherein said at least one chewing gum polyester polymer forms the sole polymer of the chewing gum.

10. Chewing gum according to any of the claims 1-9, wherein said first part of the at least one polyester polymer comprises a molar content within the range of 30 to 90%, preferably within the range of 50 to 70% of said polyester polymer.

11. Chewing gum according to any of the claims 1-10, wherein said first part of the polyester polymer comprises within the range of 30 to 90%, preferably within the range of 50 to 70% by weight of said polyester polymer.

12. Chewing gum according to any of the claims 1-11, wherein said at least one chewing gum polyester polymer forms one of further polymers of the chewing gum.

13. Chewing gum according to any of the claims 1-12, wherein said at least one chewing gum polyester polymer forms one of further polyester polymers of the chewing gum.

14. Chewing gum according to any of the claims 1-13, wherein said first part of the at least one polyester polymer comprises a molar content within the range of 1 to 70%, preferably within the range of 20 to 60% of said polyester polymer.

15. Chewing gum according to any of the claims 1-14, wherein said first part of the polyester polymer comprises within the range of 1 to 70%, preferably within the range of 20 to 60% by weight of said polyester polymer.

16. Chewing gum according to any of the claims 1-15, wherein said first part of the at least one polyester polymer comprises a molar content within the range of 40 to 99%, preferably within the range of 50 to 90% of said polyester polymer.

17. Chewing gum according to any of the claims 1-16, wherein said first part of the polyester polymer comprises within the range of 40 to 99%, preferably within the range of 50 to 90% by weight of said polyester polymer.

18. Chewing gum according to any of the claims 1-17, wherein said at least one polyester polymer comprises a polyester selected from the group comprising copolymers, terpolymers, quaterpolymer, graftpolymers, blockpolymers, randomized polymers, and combinations thereof.

19. Chewing gum according to any of the claims 1-18, wherein said at least one polyester polymer comprises a block copolymer or a randomized copolymer.

20. Chewing gum according to any of the claims 1-19, wherein said at least one polyester copolymer has at least two glass transition temperatures.

21. Chewing gum according to any of the claims 1-19, wherein said at least one polyester copolymer has a single glass transition temperature.

22. Chewing gum according to any of the claims 3-21, wherein said di-functional alcohol monomers are selected from the group comprising glycols and polyglycols.

23. Chewing gum according to any of the claims 3-22, wherein said di-functional alcohol monomers contain 2 to 100 carbon atoms in the main chain.

24. Chewing gum according to any of the claims 3-23, wherein said di-functional alcohol monomers are selected from the group comprising ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, trimethylolpropane, pentaerythritol, sorbitol, mannitol, and mixtures thereof.

25. Chewing gum according to any of the claims 3-24, wherein said di-functional carboxylic acid monomers are selected from the group comprising saturated, unsaturated, aliphatic, or aromatic di-functional carboxylic acids, or combinations thereof.

26. Chewing gum according to any of the claims 3-25, wherein said di-functional carboxylic acid monomers contain 2 to 100 carbon atoms, preferably 4 to 18 carbon atoms in the main chain.

27. Chewing gum according to any of the claims 3-26, wherein said di-functional carboxylic acid monomers are selected from the group comprising oxalic acid, malonic acid, succinic acid, malic acid, tartaric acid, fumaric acid, maleic acid, glutaric acid, glutamic acid, adipic acid, glutaric acid, pimelic acid, suberic acid, azelaic acid, sebacic acid, dodecanedioic acid acid, cyclopropane dicarboxylic acid, cyclobutane dicarboxylic acid, cyclohexane dicarboxylic acid, terephthalic acid, isophthalic acid, phthalic acid, naphthalene 1,4-, 2,3-, 2,6-dicarboxylic acids, and mixtures thereof.

28. Chewing gum according to any of the claims 4-27, wherein said di-functional carboxylic acid derivative monomers are selected from the group comprising hydroxy acids, esters, anhydrides, or halides of carboxylic acids, and mixtures thereof.

29. Chewing gum according to any of the claims 4-28, wherein said di-functional carboxylic acid derivative monomers are selected from the group comprising 3-hydroxy propionic acid, 6-hydroxycaproic acid, dimethyl or diethyl oxalate, dimethyl or diethyl malonate, dimethyl or diethyl succinate, dimethyl or diethyl fumarate, dimethyl or diethyl maleate, dimethyl or diethyl glutarate, dimethyl or diethyl adipate, dimethyl or diethyl pimelate, dimethyl or diethyl suberate, dimethyl or diethyl azelate; dimethyl or diethyl sebacate, dimethyl or diethyl dodecanedioate, dimethyl or diethyl terephthalate, dimethyl or diethyl isophthalate, dimethyl or diethyl phthalate, and mixtures thereof.

30. Chewing gum according to any of the claims 1-29, wherein said ring-opening polymerisation is based on cyclic monomers selected from the group comprising glycolides, lactides, lactones, cyclic carbonates or mixtures thereof.

31. Chewing gum according to claim 30, wherein said lactide monomers are selected from the group comprising L-lactide, D,L-lactide, and mesolactide, or combinations thereof.

32. Chewing gum according to any of the claims 30-31, wherein said lactone monomers are selected from the group comprising ε-caprolactone, δ-valerolactone, γ-butyrolactone, and β-propiolactone, or mixtures thereof.

33. Chewing gum according to any of the claims 30-32, wherein said cyclic carbonate monomers are selected from the group comprising trimethylene carbonates, dioxanones, ethylene carbonates, propylene carbonates, monocabonates, dioxepanones, or mixtures thereof.

34. Chewing gum according to any of the claims 1-33, wherein said chewing gum comprises one or more chewing gum ingredients selected from the group comprising flavoring agents, sweetening agents, fillers, softeners, emulsifiers, and active ingredients.

35. Chewing gum according to claim 34, wherein said flavoring agents comprise natural and synthetic flavorings in the form of natural vegetable components, essential oils, essences, extracts, powders, including acids and other substances capable of affecting the taste profile.

36. Chewing gum according to any of the claims 1-35, wherein said chewing gum comprises flavor in an amount of 0.01 to about 25 wt %, preferably in an amount of 0.1 to about 5 wt %, said percentage being based on the total weight of the chewing gum.

37. Chewing gum according to any of the claims 1- 36, wherein the chewing gum comprises at least one softener in an amount of about 0 to about 20 % by weight of the chewing gum, more typically about 0 to about 10 % by weight of the chewing gum.

38. Chewing gum according to any of the claims 1-37, wherein the amount of emulsifier is in the range of 0 to 18 % by weight of the chewing gum.

39. Chewing gum according to any of the claims 34-38, wherein said sweetening agents are selected from the group comprising bulk sweeteners, and high intensity sweeteners, and combinations thereof.

40. Chewing gum according to any of the claims 1-39, wherein the chewing gum comprises sugar.

41. Chewing gum according to any of the claims 1-39, wherein the chewing gum is sugar free.

42. Chewing gum according to any of the claims 39-41, wherein said bulk sweeteners comprises an amount of about 5 to about 95%, preferably about 20 to about 80% by weight of the chewing gum.

43. Chewing gum according to any of the claims 1-42, wherein the chewing gum comprises high intensity sweeteners in an amount of about 0 to about 1.2 %, preferably about 0.1 to about 0.6 % by weight of the chewing gum.

44. Chewing gum according to any of the claims 1-43, wherein the chewing gum comprises filler in an amount of about 0 to about 50% by weight of the chewing gum, more typically about 10 to about 40 % by weight of the chewing gum.

45. Chewing gum according to any of the claims 1-44, wherein the chewing gum comprises at least one coloring agent.

46. Chewing gum according to any of the claims 1-45, wherein said chewing gum ingredients comprise active ingredients.

47. Chewing gum according to any of the claims 1-46, wherein said chewing gum is coated with an outer coating selected from the group comprising hard coating, soft coating and edible film-coating.

48. Chewing gum according to claim 47, wherein the outer coating comprises at least one additive component selected from the group comprising a binding agent, a moisture absorbing component, a film forming agent, a dispersing agent, an antisticking component, a bulking agent, a flavouring agent, a coloring agent, a pharmaceutically or cosmetically active component, a lipid component, a wax component, a sugar, an acid and an agent capable of accelerating the after-chewing degradation of the degradable polymers.

49. Chewing gum according to any of the claims 1-48, wherein said chewing gum polyester polymer is obtainable by said condensation polymerization performed first and said ring-opening polymerization performed afterwards.

50. Chewing gum according to any of the claims 1-48, wherein said chewing gum polyester polymer is obtainable by said condensation polymerization and said ring-opening polymerization performed randomized.

51. Chewing gum according to any of the claims 1-50, wherein said polyester polymer is obtained by a combination of condensation polymerization and ring-opening polymerization.

52. Chewing gum according to any of the claims 1-51, wherein at least a first part of the monomers of said polyester polymer are polymerized by condensation polymerization, and wherein at least a further part of the monomers of said polyester polymer are polymerized by ring-opening polymerization.

53. Method of obtaining a chewing gum polyester polymer according to claim 1, whereby said condensation polymerization is carried out to prepare a prepolymer, which is afterwards used for initiation of a ring-opening polymerization.

## Patentansprüche

1. Kaugummi, welcher mindestens ein Kaugummi-Polyesterpolymer umfasst,
wobei mindestens ein erster Teil des Polyesterpolymers durch Kondensationspolymerisation erhältlich ist und mindestens ein weiterer Teil des Polyesterpolymers durch Ringöffnungspolymerisation erhältlich ist,
wobei das mindestens eine Kaugummi-Polyesterpolymer mindestens ein difunktionelles Monomer umfasst und
wobei das mindestens eine difunktionelle Monomer dem Polyesterpolymer eine lineare Struktur verleiht.

2. Kaugummi nach Anspruch 1, wobei das mindestens eine Polyesterpolymer mindestens teilweise biologisch abbaubar ist.

3. Kaugummi nach einem der Ansprüche 1 oder 2, wobei die Kondensationspolymerisation auf difunktionellen Monomeren basiert, die aus der Gruppe von Alkoholen und Säuren ausgewählt sind.

4. Kaugummi nach einem der Ansprüche 1-3, wobei die Kondensationspolymerisation auf difunktionellen Monomeren basiert, die aus der Gruppe von Alkoholen, Carbonsäuren, Hydroxycarbonsäuren oder deren Derivaten ausgewählt sind.

5. Kaugummi nach einem der Ansprüche 1-4, wobei die Ringöffnungspolymerisation auf cyclischen Ester-Monomeren, cyclischen Carbonat-Monomeren oder deren Kombinationen basiert.

6. Kaugummi nach einem der Ansprüche 1-5, wobei das Molverhältnis zwischen den Monomeren, die den ersten und den weiteren Teil des Polyesterpolymers bilden, im Bereich von 1:1000 und 1000:1, bezogen auf das Gewicht, liegt.

7. Kaugummi nach einem der Ansprüche 1-6, wobei die Monomere, die den ersten Teil des Polyesterpolymers bilden, einen molaren Gehalt im Bereich von 1 bis 99% des Polyesterpolymers umfassen.

8. Kaugummi nach einem der Ansprüche 1-7, wobei die Monomere, die den weiteren Teil des Polyesterpolymers bilden, einen molaren Gehalt im Bereich von 1 bis 99% des Polyesterpolymers umfassen.

9. Kaugummi nach einem der Ansprüche 1-8, wobei das mindestens eine Kaugummi-Polyesterpolymer das einzige Polymer des Kaugummis bildet.

10. Kaugummi nach einem der Ansprüche 1-9, wobei der erste Teil des mindestens einen Polyesterpolymers einen molaren Gehalt im Bereich von 30 bis 90%, vorzugsweise im Bereich von 50 bis 70% des Polyesterpolymers umfasst.

11. Kaugummi nach einem der Ansprüche 1-10, wobei der erste Teil des Polyesterpolymers einen Bereich von 30 bis 90%, vorzugsweise einen Bereich von 50 bis 70% bezogen auf das Gewicht des Polyesterpolymers, umfasst.

12. Kaugummi nach einem der Ansprüche 1-11, wobei das mindestens eine Kaugummi-Polyesterpolymer eines von weiteren Polymeren des Kaugummis bildet.

13. Kaugummi nach einem der Ansprüche 1-12, wobei das mindestens eine Kaugummi-Polyesterpolymer eines von weiteren Polyesterpolymeren des Kaugummis bildet.

14. Kaugummi nach einem der Ansprüche 1-13, wobei der erste Teil des mindestens einen Polyesterpolymers einen molaren Gehalt im Bereich von 1 bis 70%, vorzugsweise im Bereich von 20 bis 60% des Polyesterpolymers umfasst.

15. Kaugummi nach einem der Ansprüche 1-14, wobei der erste Teil des Polyesterpolymers einen Bereich von 1 bis 70%, vorzugsweise einen Bereich von 20 bis 60%, bezogen auf das Gewicht des Polyesterpolymers, umfasst.

16. Kaugummi nach einem der Ansprüche 1-15, wobei der erste Teil des mindestens einen Polyesterpolymers einen molaren Gehalt im Bereich von 40 bis 99%, vorzugsweise im Bereich von 50 bis 90% des Polyesterpolymers umfasst.

17. Kaugummi nach einem der Ansprüche 1-16, wobei der erste Teil des Polyesterpolymers einen Bereich von 40 bis 99%, vorzugsweise einen Bereich von 50 bis 90%, bezogen auf das Gewicht des Polyesterpolymers, umfasst.

18. Kaugummi nach einem der Ansprüche 1-17, wobei das mindestens eine Polyesterpolymer einen Polyester umfasst, welcher ausgewählt ist aus der Gruppe umfassend Copolymere, Terpolymere, C2uaterpolymere, Pfropfpolymere, Blockpolymere, statistische Polymere und deren Kombinationen.

19. Kaugummi nach einem der Ansprüche 1-18, wobei das mindestens eine Polyesterpolymer ein Blockcopolymer oder ein statistisches Copolymer umfasst.

20. Kaugummi nach einem der Ansprüche 1-19, wobei das mindestens eine Polyestercopolymer mindestens zwei Glasübergangstemperaturen aufweist.

21. Kaugummi nach einem der Ansprüche 1-19, wobei das mindestens eine Polyestercopolymer eine einzige Glasübergangstemperatur aufweist.

22. Kaugummi nach einem der Ansprüche 3-21, wobei die difunktionellen Alkohol-Monomere aus der Glycole und Polyglycole umfassenden Gruppe ausgewählt sind.

23. Kaugummi nach einem der Ansprüche 3-22, wobei die difunktionellen Alkohol-Monomere 2 bis 100 Kohlenstoffatome in der Hauptkette enthalten.

24. Kaugummi nach einem der Ansprüche 3-23, wobei die difunktionellen Alkohol-Monomere aus der Ethylenglycol, 1,2-Propandiol, 1,3-Propandiol, 1,3-Butandiol, 1,4-Butandiol, 1,6-Hexandiol, Diethylenglycol, 1,4-Cyclohexandiol, 1,4-Cyclohexandimethanol, Neopentylglycol, Trimethylolpropan, Pentaerythritol, Sorbitol, Mannitol und deren Mischungen umfassenden Gruppe ausgewählt sind.

25. Kaugummi nach einem der Ansprüche 3-24, wobei die difunktionellen Carbonsäure-Monomere aus der gesättigte, ungesättigte, aliphatische oder aromatische difunktionelle Carbonsäuren oder deren Kombinationen umfassenden Gruppe ausgewählt sind.

26. Kaugummi nach einem der Ansprüche 3-25, wobei die difunktionellen Carbonsäure-Monomere 2 bis 100 Kohlenstoffatome, vorzugsweise 4 bis 18 Kohlenstoffatome in der Hauptkette enthalten.

27. Kaugummi nach einem der Ansprüche 3-26, wobei die difunktionellen Carbonsäure-Monomere aus der Oxalsäure, Malonsäure, Bernsteinsäure, Äpfelsäure, Weinsäure, Fumarsäure, Maleinsäure, Glutarsäure, Glutaminsäure, Adipinsäure, Glucarsäure, Pimelinsäure, Suberinsäure, Azelainsäure, Sebacinsäure, Dodecandicarbonsäure, Cyclopropandicarbonsäure, Cyclobutandicarbonsäure, Cyclohexandicarbonsäure, Terephthalsäure, Isophthalsäure, Phthalsäure, Naphthalin-1,4-, -2,3-, -2,6-dicarbonsäure und deren Mischungen umfassenden Gruppe ausgewählt sind.

28. Kaugummi nach einem der Ansprüche 4-27, wobei die difunktionellen Carbonsäurederivat-Monomere aus der Hydroxysäuren, Ester, Anhydride oder Halogenide von Carbonsäuren und deren Mischungen umfassenden Gruppe ausgewählt sind.

29. Kaugummi nach einem der Ansprüche 4-28, wobei die difunktionellen Carbonsäurederivat-Monomere aus der 3-Hydroxypropionsäure, 6-Hydroxycapronsäure, Dimethyl- oder Diethyloxalat, Dimethyl- oder Diethylmalonat, Dimethyl- oder Diethylsuccinat, Dimethyl- oder Diethylfumarat, Dimethyl- oder Diethylmaleat, Dimethyl- oder Diethylglutarat, Dimethyl- oder Diethyladipat, Dimethyl- oder Diethylpimelat, Dimethyl- oder Diethylsuberat, Dimethyl- oder Diethylazelat, Dimethyl- oder Diethylsebacat, Dimethyl- oder Diethyldodecandioat, Dimethyl- oder Diethylterephthalat, Dimethyl- oder Diethylisophthalat, Dimethyl- oder Diethylphthalat und deren Mischungen umfassenden Gruppe ausgewählt sind.

30. Kaugummi nach einem der Ansprüche 1-29, wobei die Ringöffnungspolymerisation auf cyclischen Monomeren basiert, die aus der Glycolide, Lactide, Lactone, cyclische Carbonate oder deren Mischungen umfassenden Gruppe ausgewählt sind.

31. Kaugummi nach Anspruch 30, wobei die Lactid-Monomere aus der L-Lactid, D,L-Lactid und Mesolactid oder deren Kombinationen umfassenden Gruppe ausgewählt sind.

32. Kaugummi nach einem der Ansprüche 30-31, wobei die Lacton-Monomere aus der ε-Caprolacton, δ-Valerolacton, γ-Butyrolacton und β-Propiolacton oder deren Mischungen umfassenden Gruppe ausgewählt sind.

33. Kaugummi nach einem der Ansprüche 30-32, wobei die cyclischen Carbonat-Monomere aus der Trimethylencarbonate, Dioxanone, Ethylencarbonate, Propylencarbonate, Monocarbonate, Dioxepanone oder deren Mischungen umfassenden Gruppe ausgewählt sind.

34. Kaugummi nach einem der Ansprüche 1-33, wobei der Kaugummi einen oder mehrere Kaugummi-Bestandteile umfasst, die aus der Geschmacksstoffe, Süßungsmittel, Füllstoffe, Weichmacher, Emulgiermittel und Wirkstoffe umfassenden Gruppe ausgewählt sind.

35. Kaugummi nach Anspruch 34, wobei die Geschmacksstoffe natürliche und synthetische Geschmacksstoffe in Form von natürlichen pflanzlichen Bestandteilen, ätherischen Ölen, Essenzen, Extrakten, Pulvern, einschließlich Säuren und anderer Substanzen, die in der Lage sind, das Geschmacksprofil zu beeinflussen, umfassen.

36. Kaugummi nach einem der Ansprüche 1-35, wobei der Kaugummi Geschmacksstoff in einer Menge von 0,01 bis etwa 25 Ges:%, vorzugsweise in einer Menge von 0,1 bis etwa 5 Gew.-% umfasst, wobei der Prozentsatz auf das Gesamtgewicht des Kaugummis bezogen ist.

37. Kaugummi nach einem der Ansprüche 1-36, wobei der Kaugummi mindestens einen Weichmacher in einer Menge von etwa 0 bis etwa 20 Gew.% des Kaugummis, noch typischer etwa 0 bis etwa 10 Gew.-% des Kaugummis umfasst.

38. Kaugummi nach einem der Ansprüche 1-37, wobei die Menge von Emulgiermittel im Bereich von 0 bis 18 Gew.-% des Kaugummis liegt.

39. Kaugummi nach einem der Ansprüche 34-38, wobei die Süßungsmittel aus der Füllsüf3stoffe und hochintensive Süßstoffe und deren Kombinationen umfassenden Gruppe ausgewählt sind.

40. Kaugummi nach einem der Ansprüche 1-39, wobei der Kaugummi Zucker umfasst.

41. Kaugummi nach einem der Ansprüche 1-39, wobei der Kaugummi zuckerfrei ist.

42. Kaugummi nach einem der Ansprüche 39-41, wobei die Füllsüßstoffe eine Menge von etwa 5 bis etwa 95%, vorzugsweise etwa 20 bis etwa 80%, bezogen auf das Gewicht des Kaugummis, umfassen.

43. Kaugummi nach einem der Ansprüche 1-42, wobei der Kaugummi hochintensive Süßstoffe in einer Menge von etwa 0 bis etwa 1,2%, vorzugsweise etwa 0,1 bis etwa 0,6%, bezogen auf das Gewicht des Kaugummis, umfasst.

44. Kaugummi nach einem der Ansprüche 1-43, wobei der Kaugummi Füllstoff in einer Menge von etwa 0 bis etwa 50 Gew.-% des Kaugummis, noch typischer etwa 10 bis etwa 40 Gew.-% des Kaugummis umfasst.

45. Kaugummi nach einem der Ansprüche 1-44, wobei der Kaugummi mindestens ein Färbemittel umfasst.

46. Kaugummi nach einem der Ansprüche 1-45, wobei die Kaugummi-Bestandteile Wirkstoffe umfassen.

47. Kaugummi nach einem der Ansprüche 1-46, wobei der Kaugummi mit einem äußeren Überzug überzogen ist, der aus der harte Überzüge, weiche Überzüge und essbare Filmüberzüge umfassenden Gruppe ausgewählt ist.

48. Kaugummi nach Anspruch 47, wobei der äußere Überzug mindestens einen zusätzlichen Bestandteil umfasst, der ausgewählt ist aus der Gruppe umfassend ein Bindemittel, einen Feuchtigkeit absorbierenden Bestandteil, ein filmbildendes Mittel, ein Dispergiermittel, einen Klebrigkeit verhindernden Bestandteil, einen Füllstoff, einen Geschmacksstoff, ein Färbemittel, einen pharmazeutisch oder kosmetisch wirksamen Bestandteil, einen Lipid-Bestandteil, einen Wachs-Bestandteil, einen Zucker, eine Säure und ein Mittel, das in der Lage ist, den nach dem Kauen erfolgenden Abbau der abbaubaren Polymere zu beschleunigen.

49. Kaugummi nach einem der Ansprüche 1-48, wobei das Kaugummi-Polyesterpolymer erhalten werden kann, indem zuerst die Kondensationspolymerisation ausgeführt wird und danach die Ringöffnungspolymerisation ausgeführt wird.

50. Kaugummi nach einem der Ansprüche 1-48, wobei das Kaugummi-Polyesterpolymer erhalten werden kann, indem die Kondensationspolymerisation und die Ringöffnungspolymersation randomisiert ausgeführt werden.

51. Kaugummi nach einem der Ansprüche 1-50, wobei das Polyesterpolymer durch eine Kombination von Kondensationspolymerisation und Ringöffnungspolymerisation erhalten wird.

52. Kaugummi nach einem der Ansprüche 1-51, wobei mindestens ein erster Teil der Monomere des Polyesterpolymers durch Kondensationspolymerisation polymerisiert wird und wobei mindestens ein weiterer Teil der Monomere des Polyesterpolymers durch Ringöffnungspolymerisation polymerisiert wird.

53. Verfahren zum Herstellen eines Kaugummi-Polyesterpolymers nach Anspruch 1, wobei die Kondensationspolymerisation ausgeführt wird, um ein Prepolymer herzustellen, das nachher für die Initiierung einer Ringöffnungspolymerisation verwendet wird.

## Revendications

1. Gomme à mâcher comprenant au moins un polyester pour gomme à mâcher, dans laquelle au moins une première partie dudit polyester peut être obtenue par polymérisation par condensation et au moins une autre partie dudit polyester peut être obtenue par polymérisation par ouverture de cycle,
dans laquelle ledit au moins un polyester pour gomme à mâcher comprend au moins un monomère difonctionnel, et
dans laquelle ledit au moins un monomère difonctionnel confère une structure linéaire dans ledit polyester.

2. Gomme à mâcher selon la revendication 1, dans laquelle ledit au moins un polyester est au moins en partie biodégradable.

3. Gomme à mâcher selon l'une quelconque des revendications 1 ou 2, dans laquelle ladite polymérisation par condensation est basée sur des monomères difonctionnels choisis parmi le groupe des alcools et des acides.

4. Gomme à mâcher selon l'une quelconque des revendications 1 à 3, dans laquelle ladite polymérisation par condensation est basée sur des monomères difonctionnels choisis parmi le groupe des alcools, des acides carboxyliques, des acides hydroxycarboxyliques, ou des dérivés de ces derniers.

5. Gomme à mâcher selon l'une quelconque des revendications 1 à 4, dans laquelle ladite polymérisation par ouverture de cycle est basée sur des monomères d'ester cyclique, des monomères de carbonate cyclique ou des combinaisons de ces derniers.

6. Gomme à mâcher selon l'une quelconque des revendications 1 à 5, dans laquelle le rapport molaire entre les monomères formant ladite première partie et ladite autre partie du polyester va de 1 : 1 000 à 1 000 : 1 en poids.

7. Gomme à mâcher selon l'une quelconque des revendications 1 à 6, dans laquelle les monomères formant ladite première partie du polyester constituent une fraction molaire allant de 1 à 99 % dudit polyester.

8. Gomme à mâcher selon l'une quelconque des revendications 1 à 7, dans laquelle les monomères formant ladite autre partie du polyester constituent ne fraction molaire allant de 1 à 99 % dudit polyester.

9. Gomme à mâcher selon l'une quelconque des revendications 1 à 8, dans laquelle ledit au moins un polyester pour gomme à mâcher constitue l'unique polymère de la gomme à mâcher.

10. Gomme à mâcher selon l'une quelconque des revendications 1 à 9, dans laquelle ladite première partie du au moins un polyester constitue une fraction molaire allant de 30 à 90 %, de préférence de 50 à 70 % dudit polyester.

11. Gomme à mâcher selon l'une quelconque des revendications 1 à 10, dans laquelle ladite première partie du polyester constitue de 30 à 90 %, de préférence de 50 à 70 % en poids dudit polyester.

12. Gomme à mâcher selon l'une quelconque des revendications 1 à 11, dans laquelle ledit au moins un polyester pour gomme à mâcher constitue un des autres polymères de la gomme à mâcher.

13. Gomme à mâcher selon l'une quelconque des revendications 1 à 12, dans laquelle ledit au moins un polyester pour gomme à mâcher constitue un des autres polyesters de la gomme à mâcher.

14. Gomme à mâcher selon l'une quelconque des revendications 1 à 13, dans laquelle ladite première partie du au moins un polyester constitue une fraction molaire allant de 1 à 70 %, de préférence de 20 à 60 % dudit polyester.

15. Gomme à mâcher selon l'une quelconque des revendications 1 à 14, dans laquelle ladite première partie du polyester constitue de 1 à 70 %, de préférence de 20 à 60 % en poids dudit polyester.

16. Gomme à mâcher selon l'une quelconque des revendications 1 à 15, dans laquelle ladite première partie du au moins un polyester constitue une fraction molaire allant de 40 à 99 %, de préférence de 50 à 90 % dudit polyester.

17. Gomme à mâcher selon l'une quelconque des revendications 1 à 16, dans laquelle ladite première partie du polyester constitue de 40 à 99 %, de préférence de 50 à 90 % en poids dudit polyester.

18. Gomme à mâcher selon l'une quelconque des revendications 1 à 17, dans laquelle ledit au moins un polyester constitue un polyester choisi parmi le groupe comprenant des copolymères, des terpolymères, des quaterpolymères, des polymères greffés, des polymères séquencés, des polymères statistiques, et des combinaisons de ces derniers.

19. Gomme à mâcher selon l'une quelconque des revendications 1 à 18, dans laquelle ledit au moins un polyester constitue un copolymère séquence ou un copolymère statistique.

20. Gomme à mâcher selon l'une quelconque des revendications 1 à 19, dans laquelle ledit au moins un copolymère de polyester possède au moins deux températures de transition vitreuse.

21. Gomme à mâcher selon l'une quelconque des revendications 1 à 19, dans laquelle ledit au moins un copolymère de polyester possède une seule température de transition vitreuse.

22. Gomme à mâcher selon l'une quelconque des revendications 3 à 21, dans laquelle lesdits monomères d'alcool difonctionnels sont choisis parmi le groupe comprenant les glycols et les polyglycols.

23. Gomme à mâcher selon l'une quelconque des revendications 3 à 22, dans laquelle lesdits monomères d'alcool difonctionnels contiennent de 2 à 100 atomes de carbone dans la chaîne principale.

24. Gomme à mâcher selon l'une quelconque des revendications 3 à 23, dans laquelle lesdits monomères d'alcool difonctionnels sont choisis parmi le groupe comprenant l'éthylène glycol, le 1,2-propanediol, le 1,3-propanediol, le 1,3-butanediol, le 1,4-butanediol, le 1,6-hexanediol, le diéthylène glycol, le 1,4-cyclohexanediol, le 1,4-cyclohexanediméthanol, le néopentyle glycol, le ttiméthylolpropane, le pentaérythritol, le sorbitol, le mannitol, et des mélanges de ces derniers.

25. Gomme à mâcher selon l'une quelconque des revendications 3 à 24, dans laquelle lesdits monomères d'acide carboxylique difonctionnels sont choisis parmi le groupe comprenant des acides carboxyliques fonctionnels saturés, insaturés, aliphatiques, ou aromatiques, ou des combinaisons de ces derniers.

26. Gomme à mâcher selon l'une quelconque des revendications 3 à 25, dans laquelle lesdits monomères d'acide carboxylique difonctionnels contiennent de 2 à 100 atomes de carbone, de préférence de 4 à 18 atomes de carbone dans la chaîne principale.

27. Gomme à mâcher selon l'une quelconque des revendications 3 à 26, dans laquelle lesdits monomères d'acide carboxylique difonctionnels sont choisis parmi le groupe comprenant l'acide oxalique, l'acide malonique, l'acide succinique, l'acide malique, l'acide tartarique, l'acide fumarique, l'acide maléique, l'acide glutarique, l'acide glutamique, l'acide adipique, l'acide glucarique, l'acide pimélique, l'acide subérique, l'acide azélaïque, l'acide sébacique, l'acide dodécanedioïque, l'acide cyclopropane dicarboxylique, l'acide cyclobutane dicarboxylique, l'acide cyclohexane dicarboxylique, l'acide téréphtalique, l'acide isophtalique, l'acide phtalique, les acides naphtalène 1,4-, 2,3-, 2,6-dicarboxyliques, et des mélanges de ces derniers.

28. Gomme à mâcher selon l'une quelconque des revendications 4 à 27, dans laquelle lesdits monomères dérivés d'acide carboxylique difonctionnels sont choisis parmi le groupe comprenant des acides hydroxy, des esters, des anhydrides ou des halogénures d'acides carboxyliques, et des mélanges de ces dernier.

29. Gomme à mâcher selon l'une quelconque des revendications 4 à 28, dans laquelle lesdits monomères dérivés d'acide carboxylique difonctionnels sont choisis parmi le groupe comprenant l'acide 3-hydroxy propionique, l'acide 6-hydroxycaproïque, l'oxalate de diméthyle ou de diéthyle, le malonate de diméthyle ou de diéthyle, le succinate de diméthyle ou de diéthyle, le fumarate de diméthyle ou de diéthyle, le maléate de diméthyle ou de diéthyle, le glutarate de diméthyle ou de diéthyle, l'adipate de diméthyle ou de diéthyle, le pimélate de diméthyle ou de diéthyle, le subérate de diméthyle ou de diéthyle, l'azélate de diméthyle ou de diéthyle, le sébacate de diméthyle ou de diéthyle, le dodécanedioate de diméthyle ou de diéthyle, le téréphtalate de diméthyle ou de diéthyle, l'isophtalate de diméthyle ou de diéthyle, le phtalate de diméthyle ou de diéthyle, et des mélanges de ces derniers.

30. Gomme à mâcher selon l'une quelconque des revendications 1 à 29, dans laquelle ladite polymérisation par ouverture de cycle est basée sur des monomères cycliques choisis parmi le groupe comprenant les glycolides, les lactides, les lactones, les carbonates cycliques ou des mélanges de ces derniers.

31. Gomme à mâcher selon la revendication 30, dans laquelle lesdits monomères de lactide sont choisis parmi le groupe comprenant le L-lactide, le D,L-lactide et le mésolactide, ou des combinaisons de ces derniers.

32. Gomme à mâcher selon l'une quelconque des revendications 30 à 31, dans laquelle lesdits monomères de lactone sont choisis parmi le groupe comprenant la ε-caprolactone, la δ-valérolactone, la γ-butyrolactone, et la β-propiolactone, ou des mélanges de ces dernières.

33. Gomme à mâcher selon l'une quelconque des revendications 30 à 32, dans laquelle lesdits monomères de carbonate cyclique sont choisis parmi le groupe comprenant les carbonates de triméthylène, les dioxanones, les carbonates d'éthylène, les carbonates de propylène, les monocarbonates, les dioxépanones, ou des mélanges de ces derniers.

34. Gomme à mâcher selon l'une quelconque des revendications 1 à 33, dans laquelle ladite gomme à mâcher comprend un ou plusieurs ingrédients pour gomme à mâcher choisis parmi le groupe comprenant des agents aromatisants, des agents édulcorants, des agents de remplissage, des agents ramollissant, des émulsifiants, et des ingrédients actifs.

35. Gomme à mâcher selon la revendication 34, dans laquelle lesdits agents aromatisants comprennent des aromatisants naturels ou synthétiques sous la forme de composants végétaux naturels, d'huiles essentielles, d'essences, d'extraits, de poudres, y compris des acides et d'autres substances capables d'affecter le profil gustatif.

36. Gomme à mâcher selon l'une quelconque des revendications 1 à 35, dans laquelle ladite gomme à mâcher comprend des aromes en une quantité allant de 0,01 à environ 25 % en poids, de préférence en une quantité allant de 0,1 à 5 % en poids, ledit pourcentage étant basé sur le poids total de la gomme à mâcher.

37. Gomme à mâcher selon l'une quelconque des revendications 1 à 36, dans laquelle ladite gomme à mâcher comprend au moins un agent ramollissant en une quantité allant d'environ 0 à environ 20 % en poids de la gomme à mâcher, plus couramment d'environ 0 à environ 10 % en poids de la gomme à mâcher.

38. Gomme à mâcher selon l'une quelconque des revendications 1 à 37, dans laquelle la quantité d'émulsifiant va de 0 à 18 % en poids de la gomme à mâcher.

39. Gomme à mâcher selon l'une quelconque des revendications 34 à 38, dans laquelle lesdits agents édulcorants sont choisis parmi le groupe comprenant des édulcorants de charge, des édulcorants de haute intensité, et des combinaisons de ces derniers.

40. Gomme à mâcher selon l'une quelconque des revendications 1 à 39, dans laquelle la gomme à mâcher comprend du sucre.

41. Gomme à mâcher selon l'une quelconque des revendications 1 à 39, dans laquelle la gomme à mâcher est exempte de sucre.

42. Gomme à mâcher selon l'une quelconque des revendications 39 à 41, dans laquelle les édulcorants de charge constituent une quantité allant d'environ 5 à environ 95 % en poids, de préférence d'environ 20 à 80 % en poids de la gomme à mâcher.

43. Gomme à mâcher selon l'une quelconque des revendications 1 à 42, dans laquelle la gomme à mâcher comprend des édulcorants de haute intensité en une quantité allant d'environ 0 à environ 1,2 % en poids, de préférence d'environ 0,1 à 0,6 % en poids de la gomme à mâcher.

44. Gomme à mâcher selon l'une quelconque des revendications 1 à 43, dans laquelle ladite gomme à mâcher comprend un agent de remplissage en une quantité allant d'environ 0 à environ 50 % en poids de la gomme à mâcher, plus couramment d'environ 10 à environ 40 % en poids de la gomme à mâcher.

45. Gomme à mâcher selon l'une quelconque des revendications 1 à 44, dans laquelle ladite gomme à mâcher comprend au moins un agent colorant.

46. Gomme à mâcher selon l'une quelconque des revendications 1 à 45, dans laquelle ladite gomme à mâcher comprend des ingrédients actifs.

47. Gomme à mâcher selon l'une quelconque des revendications 1 à 46, dans laquelle ladite gomme à mâcher est enrobée d'un enrobage extérieur choisi parmi le groupe comprenant un enrobage rigide, un revêtement souple et un film d'enrobage comestible.

48. Gomme à mâcher selon la revendication 47, dans laquelle l'enrobage extérieur comprend au moins un composant additif choisi parmi le groupe comprenant un agent liant, un composant absorbeur d'humidité, un agent de fondation de film, un agent de dispersion, un composant anti-collant, un agent gonflant, un agent aromatisant, un agent colorant, un composant actif d'un point de vue cosmétique ou pharmaceutique, un composant lipidique, un composant de cire, un sucre, un acide et un agent capable d'accélérer la dégradation après mastication des polymères dégradables.

49. Gomme à mâcher selon l'une quelconque des revendications 1 à 48, dans laquelle ledit polyester pour gomme à mâcher peut être obtenu en réalisant dans un premier temps ladite polymérisation par condensation et en réalisant par la suite ladite polymérisation par ouverture de cycle.

50. Gomme à mâcher selon l'une quelconque des revendications 1 à 48, dans laquelle ledit polyester pour gomme à mâcher peut être obtenu par ladite polymérisation par condensation et ladite polymérisation par ouverture de cycle réalisées de manière aléatoire.

51. Gomme à mâcher selon l'une quelconque des revendications 1 à 50, dans laquelle ledit polyester est obtenu par une combinaison de la polymérisation par condensation et de la polymérisation par ouverture de cycle.

52. Gomme à mâcher selon l'une quelconque des revendications 1 à 51, dans laquelle au moins une première partie des monomères dudit polyester sont polymérisés par polymérisation par condensation, et dans laquelle au moins une autre partie des monomères dudit polymère de polyester sont polymérisés par polymérisation par ouverture de cycle.

53. Procédé pour obtenir un polyester pour gomme à mâcher selon la revendication 1, moyennant quoi ladite polymérisation par condensation est réalisée afin de préparer un prépolymère, qui est par la suite utilisé pour l'initiation d'une polymérisation par ouverture de cycle.
